# EUROPÄISCHE PATENTSCHRIFT

(11) **EP 4 101 731 B1**
(45) Veröffentlichungstag und Bekanntmachung des Hinweises auf die Patenterteilung: **09.07.2025**
(21) Anmeldenummer: 22171357.1
(22) Anmeldetag: 03.05.2022
(51) Int. Cl.: B62B 5/00, B62B 3/16, B62B 5/04

(54) **LADUNGSTRÄGER**
LOAD CARRIER
PORTE-CHARGE

(30) Priorität: 10.06.2021 DE 102021115056
(43) Veröffentlichungstag der Anmeldung: 14.12.2022
(73) Patentinhaber: IPP GmbH, 58256 Ennepetal (DE)
(72) Erfinder: de Greef, Peter, 7701CN Dedemsvaart (NL)
(74) Vertreter: Roche, von Westernhagen & Ehresmann

(56) Entgegenhaltungen:
- EP-B1- 2 470 409
- WO-A1-2019/166693
- JP-A- 2002 145 074

## Beschreibung

Die Erfindung betrifft einen Ladungsträger nach dem Oberbegriff des Anspruches 1.

Die Anmelderin gehört zu den führenden Unternehmen Europas im Bereich der Bereitstellung von tauschbaren Ladungsträgern, die in sogenannten Pools vorgehalten werden. Insbesondere werden von der Anmelderin Paletten, beispielsweise Halbpaletten und Viertelpaletten zum Tausch bereitgestellt.

Die Anmelderin hat Ladungsträger seit geraumer Zeit entwickelt und umfangreich eingesetzt, wie sie beispielsweise in der DE 10 2011 003 999 A1 beschrieben sind. Bei einer solchen Palette sind insbesondere Abmessungen einer Viertelpalette vorgesehen, so dass vier nebeneinander gestellte und zu einem Rechteck konfigurierte Viertelpaletten die Maße einer Standard-Europalette (80 cm x 120 cm) ergeben. Demzufolge besitzt eine Viertelpalette Abmessungen mit einer Länge von 60 cm und einer Breite von 40 cm.

Der vorbekannte Ladungsträger der eingangs beschriebenen Art besteht aus Kunststoff und ist als Kunststoffspritzgussteil hergestellt. An der Oberseite stellt der bekannte Ladungsträger eine Auflagefläche für die Güter bereit. Hier können die Güter, z. B. Displaywaren, also beispielsweise auf einem Kartonagesockel aufgestellte Kartonagetrays mit Aktionsware befüllt, aufgestellt werden. Die bekannte Viertelpalette fügt sich gut in bestehende Logistiksysteme ein.

Der bekannte Ladungsträger weist vier eckseitig angeordnete, ebenfalls aus Kunststoff mit angespritzte Füße auf. Die Füße sind voneinander beabstandet und können von Flurförderfahrzeugen, z. B. von
einem Gabelstapler, untergriffen werden, und nach dem Anheben einfach transportiert werden.

Alternativ zu der Anordnung von festen Füßen ist es bekannt, bei Ladungsträgern Rollen vorzusehen. Hierzu können beispielsweise vier Rollen vorgesehen sein, so dass im Eckbereich des Ladungsträgers jeweils eine Rolle angebracht ist.

Beispielsweise können zwei feststehende Rollen und zwei lenkbare Rollen vorgesehen sein. Die lenkbare Rolle kann einen Hebel aufweisen. Dieser ist auch als Bremshebel oder Feststellhebel bezeichenbar, und erlaubt eine Betätigung per Fuß. Durch einmaliges Treten auf den Hebel kann die Bremse, insbesondere die Rolle, festgestellt werden, und z. B. in ihrer Orientierung und/oder in Laufrichtung, festgestellt werden. Eine weitere Betätigung des Hebels, entlang derselben Richtung, oder entlang einer entgegengesetzten Richtung, kann zu einem Lösen der Sperre oder der Bremse führen.

Aus der WO 2019/166693 A1 geht ein Ladungsträger hervor, bei dem eine am unteren Rand zurückgesetzte Kante vorgesehen ist, um Zugang zu einem Pedal oder einem Hebel einer Lenkrolle zu ermöglichen. Die Druckschrift offenbart keine bogenförmige Ausnehmung, die sich von der Oberseite des Decks bis zur Unterseite des Decks erstreckt und die insbesondere glatt und vorsprungfrei gehalten ist.

Ausgehend von einem eingangs beschriebenen Ladungsträger besteht die Aufgabe der Erfindung darin, den bekannten Ladungsträger mit den Merkmalen des Oberbegriffes des Anspruches 1 derartig weiterzubilden, dass eine komfortable Betätigung des Ladungsträgers erreicht wird.

Die Erfindung löst diese Aufgabe mit den Merkmalen des Anspruches 1, wobei das Deck des Ladungsträgers eine oberhalb des Hebels angeordnete, randseitige Ausnehmung umfasst, die einen Zugang zu dem Hebel bietet.

Gemäß der Erfindung ist an dem Deck eine Ausnehmung angeordnet. Diese Ausnehmung ist randseitig an dem Deck angebracht, und erstreckt sich insbesondere von der Hüllkontur des Decks nach innen. Die Ausnehmung ist oberhalb des Hebels angeordnet. Sie kann beispielsweise linsenförmig ausgebildet sein oder eine andere, geeignete Kontur aufweisen. Sie ermöglicht einen komfortablen Zugang zu dem Hebel.

Ein Benutzer kann den Hebel infolge der Anordnung der Ausnehmung mit seinem Fuß besser erreichen. Auch erlaubt die Ausnehmung die erleichterte Erzielung eines visuellen Kontaktes der Bedienperson zu dem Hebel. Hierdurch kann die Bedienbarkeit weiter erleichtert werden.

Zudem wird erfindungsgemäß eine geänderte Positionierung der lenkbaren Rolle derartig möglich, dass diese zwar in einem Eckbereich des Ladungsträgers angeordnet ist, aber doch so ausgelegt, bzw. mit einem derartig konstruierten Hebel ausgebildet ist, dass dieser nicht über die Hüllkontur des Ladungsträgers nach außen vorragt oder allenfalls nur geringfügig nach außen vorragt.

Hierdurch können Situationen und Konstellationen vermieden werden, in denen der Hebel ungewünscht weit nach außen, aus den Konturen des Ladungsträgers heraus, hervorragt, und mit anderen Gegenständen interferiert.

Der Hebel kann also beispielsweise so kurz ausgebildet sein, dass er nicht mehr aus den Konturen herausragt oder nur noch geringfügig übersteht, aber zugleich, infolge der erfindungsgemäßen Ausnehmung, gut erreichbar und gut auffindbar ist.

Alternativ kann im Rahmen der Erfindung auch weiter eine herkömmliche, lenkbare Rolle mit einem unverändert lang ausgebildeten Hebel verwendet werden, aber weiter nach innen hin positioniert werden, so dass der Hebel mit seinem freien Ende ebenfalls weiter innen angeordnet ist, und dennoch eine gute Erreichbarkeit des Hebels aufgrund der erfindungsgemäßen Ausnehmung gewährleistet werden kann.

Der erfindungsgemäße Ladungsträger besteht aus Kunststoff. Insbesondere besteht der gesamte Ladungsträger aus einem Stück und ist als Kunststoffspritzgussteil gefertigt. Freilich können die Rollen aus einem anderen Material bestehen, und gesondert gefertigt und an dem Ladungsträger befestigt werden.

Zumindest das Deck des Ladungsträgers besteht aus Kunststoff. Das Deck des Ladungsträgers ist gemäß der Erfindung derjenige Abschnitt des Ladungsträgers, der an seiner Oberseite eine Auflagefläche bereitstellt, und eine Unterseite, von der sich die Rollen weg erstrecken.

Bei Ladungsträgern mit einer im wesentlichen entlang der Länge und Breite des Ladungsträgers durchgehend ausgebildeten Auflagefläche erstreckt sich das Deck entlang der gesamten Länge und Breite des Ladungsträgers. Das Deck kann insbesondere eine Versteifungsstruktur aufweisen, um einerseits eine gewünschte hohe Belastbarkeit und Tragfähigkeit bereitzustellen, andererseits aber sehr leichtbauend und materialsparend konstruiert zu sein.

Gemäß der Erfindung ist die Ausnehmung bogenförmig ausgebildet. Dies ermöglicht eine Bereitstellung einer Ausnehmung, die im wesentlichen rücksprungfrei, oder glatt, ausgebildet ist, so dass jedenfalls von dem Grund der Ausnehmung keine Vorsprünge störend hervorragen.

Gemäß einer weiteren vorteilhaften Ausgestaltung der Erfindung ist der Ausnehmung eine Länge zuordnenbar, die größer ist, als eine Breite des Hebels. Diese Ausführungsform der Erfindung ermöglicht eine Zugänglichkeit und auch eine Sichtbarkeit des Hebels in verschiedenen Schwenkpositionen der lenkbaren Rolle und damit einhergehend eine Zugänglichkeit und auch eine Sichtbarkeit des Hebels in verschiedenen Schwenkpositionen des mit der Rolle mit schwenkbaren Hebels.

Gemäß der Erfindung erstreckt sich die Ausnehmung über die gesamte Höhe des Decks, insbesondere von dessen Oberseite bis zu dessen Unterseite. Dies ermöglicht eine einfache und stabile Konstruktion des erfindungsgemäßen Ladungsträgers.

Gemäß einer weiteren vorteilhaften Ausgestaltung der Erfindung weist der Ladungsträger Abmessungen auf, nämlich eine Länge und eine Breite, die den Abmessungen eines herkömmlichen Ladungsträgers entsprechen. Angemerkt sei, dass auch die Höhe eines Ladungsträgers gemäß der Erfindung der Höhe eines herkömmlichen Ladungsträgers entsprechen kann.

Gemäß einer vorteilhaften Ausgestaltung der Erfindung weist der Ladungsträger Abmessungen auf, die den Abmessungen einer Viertelpalette entsprechen. Alternativ können die Abmessungen des erfindungsgemäßen Ladungsträgers auch den Abmessungen einer Halbpalette oder einer anderen, insbesondere standardisierten Abmessung eines herkömmlichen Ladungsträgers entsprechen.

Schließlich kommen auch andere genormte Abmessungen in Betracht, so dass der erfindungsgemäße Ladungsträger ggf. gut in bestehende Logistikkonzepte und -Systeme integrierbar ist.

Gemäß einer weiteren vorteilhaften Ausgestaltung der Erfindung ist das Deck durchgehend oder im wesentlichen durchgehend ausgebildet. Das Deck erstreckt sich durchgehend entlang einer Länge und entlang einer Breite des Ladungsträgers. Ausgenommen von der durchgehenden Ausbildung des Ladungsträgers sind Versteifungstrukturen des Decks und/oder funktionale Flächen, z. B. Befestigungsflächen, Befestigungsschlitze, taschenartige Aufnahmen für Rollen einer auf dem Ladungsträger gestapelten Rolle, etc.

Als funktionale Fläche werden auch Befestigungsöffnungen oder Rücksprünge oder Ausnehmungen oder Erhebungen oder Noppen oder dergleichen bezeichnet.

Bei dieser Ausführungsform ist der Ladungsträger z. B. nach Art einer herkömmlichen Viertelpalette ausgebildet. Insbesondere können identische oder ähnliche Schnittstellen und Befestigungsflächen wie bei einem Ladungsträger des Standes der Technik vorgesehen sein.

So können beispielsweise nach innen versetzte Ecken vorgesehen sein, die ein Überstülpen von Display-Sockelfortsätzen ermöglichen.

Auch können entlang der Schmalseiten und/oder entlang der Längsseiten des Ladungsträgers, z. B. jeweils mittig an einer entsprechenden Seite angeordnet, Aufnahmen vorgesehen sein, die eine Befestigung von Display-Sockelfortsätzen ermöglichen. Zur Vermeidung von Wiederholungen wird verwiesen auf die deutsche Patentanmeldung DE 10 2011 003 999 A1 der Anmelderin.

Gemäß einer alternativen Ausgestaltung der Erfindung ist der Ladungsträger rahmenartig ausgebildet. Hier umrandet das Deck eine zentrale Öffnung. Ein solcher rahmenartig ausgebildeter Ladungsträger weist eine Auflagefläche auf, auf der eine Einrichtung zur Aufnahme von Gütern aufgesetzt werden kann. Eine solche Einrichtung zur Aufnahme von Gütern kann beispielsweise eine herkömmliche Viertelpalette sein, oder ein Displaysockel, oder eine Kiste, oder ein Karton, eine Gitterbox, ein Container oder dergleichen.

Gemäß einer weiteren vorteilhaften Ausgestaltung der Erfindung weist der Ladungsträger vier Rollen auf. Gemäß dieser Ausgestaltung der Erfindung kann auf herkömmliche Bauformen von Ladungsträgern zurückgegriffen werden.

Gemäß einer weiteren vorteilhaften Ausgestaltung der Erfindung weist der Ladungsträger zwei feststehende Rollen und zwei lenkbare Rollen auf. Dies ermöglicht ebenfalls eine Anlehnung an Konstruktionen herkömmlicher Ladungsträger.

Gemäß einer weiteren vorteilhaften Ausgestaltung der Erfindung sind die Rollen in den Eckbereichen des Ladungsträgers angeordnet. Dies ermöglicht eine besonders stabile Konstruktion.

Gemäß einer weiteren vorteilhaften Ausgestaltung der Erfindung ist die Ausnehmung nahe einer Ecke des Ladungsträgers angeordnet. Dies ermöglicht eine verbesserte Zugänglichkeit eines Hebels einer lenkbaren Rolle, ohne die wesentlichen Funktionen des Ladungsträgers nachteilig zu beeinflussen.

Gemäß einer weiteren vorteilhaften Ausgestaltung der Erfindung ist der Ladungsträger dadurch gekennzeichnet, dass der Ladungsträger wenigstens eine lenkbare Rolle aufweist, wobei der Hebel an der lenkbaren Rolle angeordnet ist.

Gemäß einer weiteren vorteilhaften Ausgestaltung der Erfindung ist der Ladungsträger dadurch gekennzeichnet, dass der Hebel mit der lenkbaren Rolle mitdrehend ausgebildet ist.

Gemäß einer weiteren vorteilhaften Ausgestaltung der Erfindung ist der Ladungsträger dadurch gekennzeichnet, dass der Hebel mit seinem freien Ende innerhalb der Kontur oder innerhalb der Hüllkontur des Ladungsträgers angeordnet ist, oder über die Kontur des Decks oder über die Hüllkontur des Ladungsträgers höchstens geringfügig hinaus nach außen vorragt.

Gemäß einer weiteren vorteilhaften Ausgestaltung der Erfindung ist der Ladungsträger dadurch gekennzeichnet, dass der Ladungsträger stapelbar ausgebildet ist.

Gemäß einer weiteren vorteilhaften Ausgestaltung der Erfindung ist der Ladungsträger dadurch gekennzeichnet, dass an der Auflagefläche des Ladungsträgers taschenartige Aufnahmen für Rollen eines gestapelten, oberhalb des Ladungsträgers angeordneten, weiteren Ladungsträgers vorgesehen sind.

Gemäß einer weiteren vorteilhaften Ausgestaltung der Erfindung ist der Hebel mit seinem freien Ende innerhalb der Kontur des Ladungsträgers angeordnet, oder er ragt höchstens geringfügig über die Kontur des Decks hinaus nach außen vor. Hierdurch kann eine Konstruktion eines erfindungsgemäßen Ladungsträgers erreicht werden, bei der der Hebel nicht mit anderen Vorrichtungen, anderen Ladungsträgern oder anderen Einrichtungen zusammenstößt oder anderweitig interferiert. Insbesondere ist das Handling solcher Ladungsträger sowie darauf gelagerter und transportierter Güter auf diese Weise erleichtert.

Gemäß einer weiteren vorteilhaften Ausgestaltung der Erfindung ist der Ladungsträger stapelbar ausgebildet. Hierzu kann insbesondere vorgesehen sein, dass an der Auflagefläche des Ladungsträgers taschenartige Aufnahmen vorgesehen sind. Die taschenartigen Aufnahmen dienen der Aufnahme der Rollen eines benachbart angeordneten Ladungsträgers bei gestapelter Anordnung.

Hierdurch kann eine komprimierte Stapelung erreicht werden. Zugleich kann verhindert werden, dass bei gestapelter Anordnung mehrerer Ladungsträger übereinander eine unbeabsichtigte Relativbewegung der Ladungsträger eintritt.

Die Erfindung bezieht sich gemäß einem weiteren Aspekt auf eine Vorrichtung zur Warenpräsentation im Einzelhandel.

Insbesondere bezieht sich die Erfindung auf eine Vorrichtung nach Art eines Displays.

Als Display, oder als Vorrichtung zur Warenpräsentation, werden Vorrichtungen bezeichnet, die z. B. Aktionsware im Einzelhandel präsentieren und für einen Verkauf bereitstellen. Derartige Waren werden häufig auf Viertelpaletten, ggf. auch auf Halbpaletten, transportiert.

Eine solche Vorrichtung besitzt das Erfordernis, dass die Vorrichtung häufig umzustellen ist, beispielsweise, weil geänderte Präsentationen in den Verkaufsräumen zu verschiedenen Zeitpunkten eine Anpassung erfordern.

Gerade hier kommt es auf eine komfortable Bedienung an.

Die Erfindung schlägt hierzu eine Vorrichtung zur Warenpräsentation vor, die einen Ladungsträger nach einem der vorgenannten Ansprüche einsetzt.

Damit kann ein Warendisplay auf einfache Weise umgesetzt oder transportiert werden, und auch festgestellt bzw. wieder gelöst werden. Die erfindungsgemäß vorgesehene randseitige Ausnehmung ermöglicht eine leichte Zugänglichkeit des Hebels für die lenkbare Rolle.

Weitere Vorteile der Erfindung ergeben sich aus den nicht zitierten Unteransprüchen, sowie anhand der in den Zeichnungen dargestellten Ausführungsbeispiele der Erfindung. Darin zeigen:
- Fig. 1: in einer schematischen, perspektivischen Ansicht ein Ausführungsbeispiel eines erfindungsgemäßen Ladungsträgers,
- Fig. 2: einen vergrößerten Ausschnittsbereich der unteren rechten Ecke des Ladungsträgers der Fig. 1 in einer Darstellung gemäß Fig. 1, etwa gemäß Teilkreis II in Fig. 1,
- Fig. 3: den ausgeschnittenen Eckbereich des Ladungsträgers der Fig. 2 in einer Draufsicht, etwa entlang Ansichtspfeil III in Fig. 2,
- Fig. 4: den Ladungsträger der Fig. 1 in einer Draufsicht, etwa gemäß Ansichtspfeil IV in Fig. 1,
- Fig. 5: den Ladungsträger der Fig. 4 in einer Längsseitenansicht, etwa gemäß Ansichtspfeil V in Fig. 4, und
- Fig. 6: den Ladungsträger der Fig. 1 in einer perspektivischen Unteransicht oder Rückansicht, etwa gemäß Ansichtspfeil VI in Fig. 1.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben, dargestellt oder offenbart sind, können auch bei jedem anderen Ausführungsbeispiel der Erfindung vorgesehen werden.

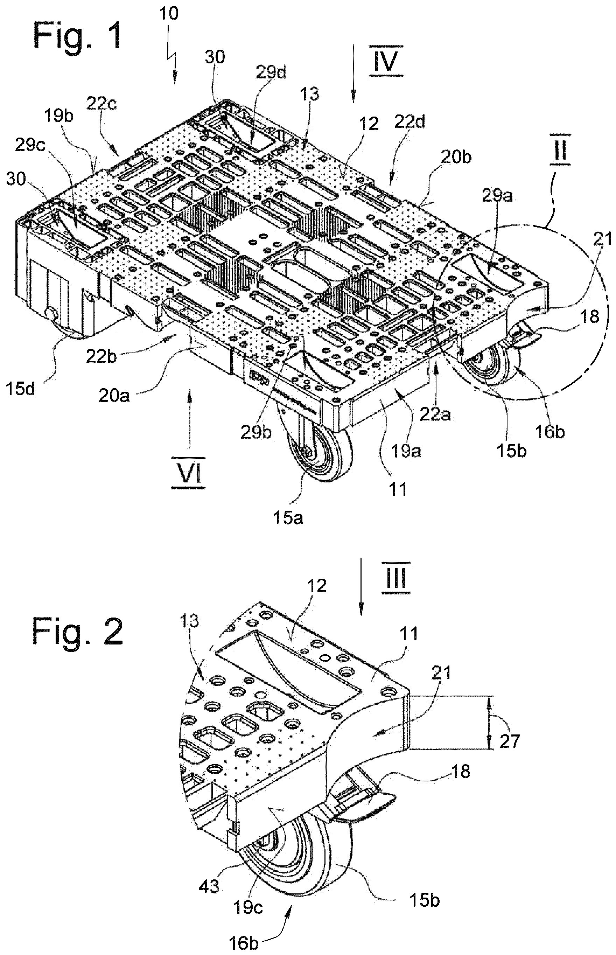

Ein erstes Ausführungsbeispiel eines erfindungsgemäßen und in seiner Gesamtheit in den Zeichnungen mit 10 bezeichneten Ladungsträgers ist in Fig. 1 in perspektivischer Ansicht dargestellt:
Der Ladungsträger umfasst ein Deck 11, mit einer Oberseite 12 und einer Unterseite 14. Die Oberseite 12 dient als Auflagefläche 13 zum Aufnehmen von in den Figuren nicht dargestellten Gütern.

Insbesondere können auf der Auflagefläche 13 Displaywaren aufgesetzt werden. Hierbei kann es sich z. B. um Sockel, z. B. Kartonagesockel, eines Warendisplays handeln, auf dem Trays, insbesondere Kartonagetrays, mit zum Abverkauf vorgesehenen Waren angeordnet sind.

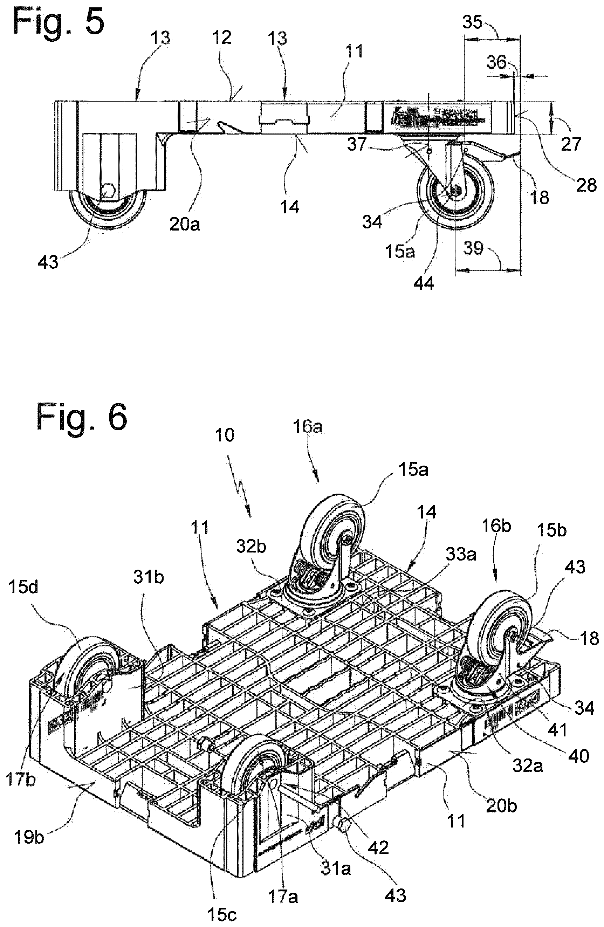

Von der Unterseite 14 des Ladungsträgers 10 erstrecken sich vier Rollen 15a, 15b, 15c, 15d, die jeweils in den Eckbereichen des Ladungsträgers angeordnet sind. Von den vier Rollen sind, wie am besten aus Fig. 6 ersichtlich, zwei Rollen 16a, 16b lenkbar und zwei Rollen 17a, 17b feststehend ausgebildet.

An einer der lenkbaren Rollen, bei dem Ausführungsbeispiel der Fig. 2 an der Rolle 16b, ist ein Hebel 18 angeordnet. Es handelt sich dabei um einen Bremshebel oder einen Feststellhebel, der durch einmaliges Betätigen mit dem Fuß einer Bedienperson betätigbar und bei einer nochmaligen Betätigung in dieselbe Richtung oder in eine Gegenrichtung wieder lösbar ist. Bei Betätigung des Hebels 18 kann z. B. die Rolle 16b bezüglich einer Schwenkbewegung um ihre Lenkachse 37 festgestellt werden, oder bezüglich einer Rollbewegung um ihre Rollendrehachse 44 festgestellt werden, oder es können beide Bewegungen verhindert werden.

Die Erfindung bezieht sich auf Ladungsträger, die wenigstens eine lenkbare Rolle 16b und wenigstens einen Hebel 18 umfassen. Von der Erfindung sind auch Ladungsträger umfasst, an denen mehrere lenkbare Rollen 16a, 16b angeordnet sind, von denen eine oder mehrere einen Hebel 18 aufweisen.

Der Ladungsträger 10 weist zwei Schmalseiten 19a, 19b und zwei Längsseiten 20a, 20b auf. Der Ladungsträger 10 besitzt eine Länge 45 und eine Breite 46. Diese Abmessungen entsprechen bei dem Ausführungsbeispiel den Abmessungen einer herkömmlichen Viertelpalette. Demnach beträgt die Länge 45 etwa 60 cm und die Breite 46 etwa 40 cm.

Im Bereich der Schmalseite 19a ist, wie am besten in Fig. 1 ersichtlich, eine Ausnehmung 21 angeordnet. Die Ausnehmungen 21 ist als Randausnehmung ausgebildet, d. h., sie erstreckt sich von der Hüllkontur 47 nach innen.

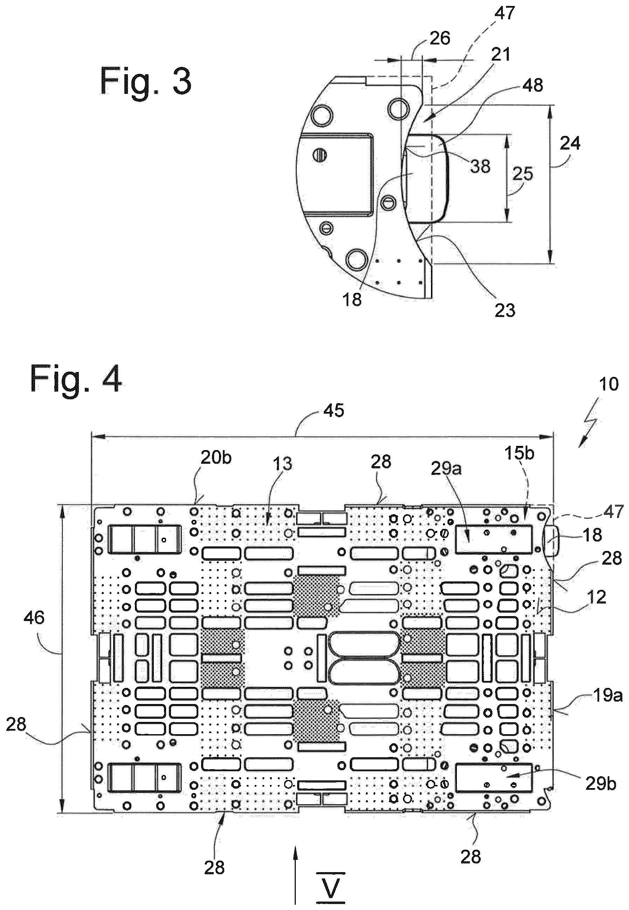

Die Hüllkontur 47 ist in Fig. 3 gestrichelt angedeutet. Die Hüllkontur 47 ergibt sich dadurch, dass die jeweils entlang einer Ebene ausgerichteten, nach außen vorstehenden Außenseiten der Schmalseite 19a und der Längsseite 20b - hypothetisch - fortgesetzt werden, über den Bereich der Ausnehmung 21 hinaus.

Im Bereich der Schmalseiten 19a, 19b und im Bereich der Längsseiten 20a, 20b sind jeweils mittig Befestigungsöffnungen 22a, 22b, 22c, 22d angeordnet, die der Befestigung von nicht dargestellten Fortsätzen eines ebenfalls nicht dargestellten Displaysockels, z. B. eines Kartonagesockels für eine Warenpräsentationsvorrichtung dienen. Bei dem Ausführungsbeispiel der Fig. 1 entsprechen die angedeuteten Befestigungsöffnungen z. B. 22a, 22b, exakt den Befestigungsöffnungen, wie sie in der DE 10 2011 003 999 A1 der Anmelderin beschrieben sind.

Gemäß Fig. 3 weist die Randausnehmung 21 eine Kontur 23 auf, die bogenförmig, insbesondere stetig gekrümmt, ausgebildet ist. Von der Erfindung sind auch weitere, in den Figuren nicht dargestellte, Ausführungsbeispiele umfasst, bei denen die Kontur 23 des Grundes der Ausnehmung 21 von einer Bogenform oder von einer Kreisform abweicht.

Bei dem Ausführungsbeispiel der Fig. 3 ist dem Hebel 18, insbesondere dem freien Ende 48 des Hebels, eine Breite 25 zugeordnet, die sich entlang der Schmalseite 19a erstreckt. Auch der Ausnehmung 21 kann entlang der Richtung des Verlaufs der Schmalseite 19a eine Länge 24 zugeordnet werden. Von der Erfindung ist insbesondere umfasst, wenn die Länge 24 der Ausnehmung 21 größer ist, als die Breite 25 des Hebels 18, oder als die Breite des freien Endes 48 des Hebels 18.

Bei dem Ausführungsbeispiel der Fig. 3 weist die Ausnehmung 21 eine Tiefe auf, die mit 26 bezeichnet ist. Bei dem Ausführungsbeispiel der Fig. 3 wird die Tiefe 26 gemessen zwischen dem in Fig. 3 erkennbaren Eckbereich und dem Grund der Ausnehmung 21. Dabei ist zu berücksichtigen, dass die Ecke selbst bereits gegenüber der Hüllkontur 47 nach innen versetzt ist.

Bei dem Ausführungsbeispiel der Fig. 3 entspricht die Tiefe 26 der Ausnehmung 21 etwa der Hälfte der Breite 25 des Betätigungshebels 48.

Die Länge 24 der Ausnehmung 21 und die Tiefe 26 der Ausnehmung 21 sind derartig gewählt, dass das freie Ende 48 des Hebels 18 von dem Fuß einer Bedienperson sowohl bei Mittelposition des Hebels 18 als auch in unterschiedlichen Drehpositionen der lenkbaren Rolle 16b gut erreichbar ist.

Wie sich beispielsweise aus Fig. 2 ergibt, weist die Ausnehmung 21 eine Höhe 27 auf, die der Höhe des Decks 11 entspricht. Die Ausnehmung 21 erstreckt sich also in Vertikalrichtung durch das gesamte Deck 11 hindurch.

Die Kontur des Decks 11 ist insgesamt mit 28 bezeichnet: Wie Fig. 4 zeigt, ist das Deck 11 insgesamt im wesentlichen rechteckförmig ausgebildet.

An der Oberseite 12 des Decks 11 befinden sich vier taschenförmige Aufnahmen 29a, 29b, 29c, 29d, in die hinein die nicht dargestellten Rollen einer gestapelten, oberhalb des Ladungsträgers der Fig. 1 angedeuteten, ebenfalls nicht dargestellten, weiteren Palette oder eines weiteren Ladungsträgers eintauchen können. Hierdurch kann eine dicht gepackte, genestete Stapelanordnung mehrerer Ladungsträger erreicht werden.

Eine Besonderheit besteht darin, dass an einer oder an mehreren Aufnahmetaschen eine Einrichtung 30 zur Bewegungsverhinderung der Rollen im gestapelten Zustand mehrerer Ladungsträger vorgesehen ist. Diese Bewegungsverhinderung 30 kann besondere Rollhinderungsmaßnahmen vorsehen.

Ausweislich Fig. 6 ist ersichtlich, dass die beiden feststehenden Rollen 17a, 17b in einem Kunststoffgehäuse 31a 31b angeordnet sind. Dieses Kunststoffgehäuse kann vorteilhafterweise einstückigstoffschlüssig mit an den Ladungsträger 10 angespritzt sein.

Die beiden lenkbaren Rollen 16a, 16b sind jeweils über eine Befestigungsplatte 32 an die Unterseite 14 des Decks 11 angeschraubt. Es kommen auch andere Befestigungsarten, z. B. Nieten, oder eine clipsende Befestigung, in Frage.

Fig. 6 lässt bei Betrachtung der Unterseite 14 des Decks 11 erkennen, dass eine Struktur von Versteifungsstreben 33 vorgesehen ist. Hierdurch wird einerseits eine besonders stabile Konstruktion, andererseits unter minimalem Materialeinsatz auch eine sehr leichtbauende Konstruktion des Ladungsträgers 10 möglich.

Der Hebel 18 kann um eine Schwenkachse 34 schwenkbar sein, oder alternativ um eine nicht dargestellte Schwenkachse, die der Drehachse 44 der Rolle 16b entspricht, oder die zu der Drehachse 44 der Rolle parallel ausgerichtet ist. Der Hebel 18 kann eine axiale Länge - in Längsrichtung des Ladungsträgers 10 - aufweisen, die mit 35 bezeichnet ist. Fig. 5 macht deutlich, dass nur ein sehr geringer Überstand 36 des freien Endes 48 des Hebels 18 über die Hüllkontur 47 bzw. über die Kontur 28 des Decks 11 hinaus erreicht ist. Hierdurch sind störende Beeinträchtigungen durch Stöße oder Verhakungen des Hebels 18 mit anderen, in den Figuren nicht dargestellten Körpern, minimiert.

Bei weiteren, nicht dargestellten Ausführungsformen der Erfindung kann die axiale Länge 35 des Hebels 18 kürzer ausgebildet sein, oder die Rolle 16b weiter nach innen versetzt sein, so dass gewährleistet ist, dass der Hebel 18 mit seinem freien Ende überhaupt nicht aus der Hüllkontur 47 herausragt.

Der Grund der Ausnehmung 21 ist in den Figuren mit 38 bezeichnet. Vorteilhaft ist, wenn diese Grundfläche 38 vorsprungfrei ausgebildet ist.

Wie sich insbesondere aus Fig. 5 ergibt, ist der Abstand zwischen der Drehachse 44 der drehbaren Rolle 16b und dem freien Ende 48 des Hebels 18 mit 39 bezeichnet. Gemäß der Erfindung kann dieser Abstand reduziert werden, bzw. der Hebel 18 kann verkürzt werden. Andererseits kann auch unter Beibehaltung der geometrischen Ausbildung des Hebels 18 die Rolle 16a, 16b weiter nach innen versetzt werden, und dennoch ist aufgrund der erfindungsgemäßen Ausnehmung 21 eine gute Erreichbarkeit des Hebels 18 gewährleistet.

Bei den Ausführungsbeispielen ist insbesondere unter Bezugnahme auf Fig. 6 eine Halterung für eine lenkbare Rolle 16a, 16b mit dem Bezugszeichen 41 bezeichnet, und eine Halterung für eine feststehende Rolle 17a, 17b ist mit dem Bezugszeichen 42 bezeichnet. Die Schrauben zur Befestigung sowohl der feststehenden als auch der lenkbaren Rollen sind durchgehend mit dem Bezugszeichen 43 bezeichnet.

Die lenkbaren Rollen 16a, 16b können einen in Fig. 6 lediglich angedeuteten Zentriermechanismus aufweisen. Dieser sorgt dafür, dass die lenkbaren Rollen 16a, 16b automatisch immer in ihre Mittellage hin zurück gespannt werden.

## Patentansprüche

1. Ladungsträger (10) zum Transport und/oder zur Aufbewahrung von Gütern, insbesondere in Form einer Dolly, umfassend ein aus Kunststoff bestehendes Deck (11), an dessen Oberseite (12) eine Auflagefläche (13) für die Güter oder für eine Einrichtung zur Aufnahme der Güter bereitgestellt ist, und an dessen Unterseite (14) eine Mehrzahl von Rollen (16a, 16b, 16c, 16d) angeordnet ist, wobei wenigstens eine Rolle (16b) einen Hebel (18) umfasst, der nach Art eines Brems- oder Feststellhebels ausgebildet und per Fuß betätigbar ist, wobei das Deck (11) eine oberhalb des Hebels (18) angeordnete, randseitige Ausnehmung (21) umfasst, die einen Zugang zu dem Hebel (18) bietet, und wobei sich die Ausnehmung (21) über die gesamte Höhe (27) des Decks erstreckt, insbesondere von dessen Oberseite (12) bis zu dessen Unterseite (14),
**dadurch gekennzeichnet, dass** die Ausnehmung (21) bogenförmig ausgebildet ist.

2. Ladungsträger nach Anspruch 1, **dadurch gekennzeichnet, dass** der Ausnehmung (21) eine Länge (24) zuordenbar ist, die größer ist als eine Breite (25) des Hebels (18).

3. Ladungsträger nach einem der vorangegangenen Ansprüche, **dadurch gekennzeichnet, dass** der Ladungsträger (10) Abmessungen (45, 46) aufweist, nämlich eine Länge (45) und eine Breite (46), die den Abmessungen eines herkömmlichen Ladungsträgers entsprechen.

4. Ladungsträger nach einem der vorangegangenen Ansprüche, **dadurch gekennzeichnet, dass** der Ladungsträger Abmessungen (45, 46), nämlich eine Länge (45) und eine Breite (46), einer Viertelpalette aufweist.

5. Ladungsträger nach einem der vorangegangenen Ansprüche, **dadurch gekennzeichnet, dass** das Deck (11) entlang einer Länge (45) und entlang einer Breite (46) des Ladungsträgers (10), mit Ausnahme von Versteifungsstrukturen (33) oder funktionalen Flächen (29), im Wesentlichen durchgehend ausgebildet ist.

6. Ladungsträger nach einem der vorangegangenen Ansprüche, **dadurch gekennzeichnet, dass** die Oberseite (12) des Decks (11) als durchgehende oder im Wesentlichen durchgehende Auflagefläche (13) für die Güter ausgebildet ist und sich entlang einer Länge (45) und entlang einer Breite (46) des Ladungsträgers (10) erstreckt.

7. Ladungsträger nach einem der Ansprüche 1 bis 4**, dadurch gekennzeichnet, dass** der Ladungsträger (10) rahmenartig ausgebildet ist, wobei das Deck (11) eine zentrale Öffnung umrandet.

8. Ladungsträger nach einem der vorangegangenen Ansprüche, **dadurch gekennzeichnet, dass** der Ladungsträger (10) vier Rollen (16a, 16b, 16c, 16d) aufweist.

9. Ladungsträger nach einem der vorangegangenen Ansprüche, **dadurch gekennzeichnet, dass** der Ladungsträger (10) zwei feststehende Rollen (16c, 16d) und zwei lenkbare Rollen (16a, 16b) aufweist.

10. Ladungsträger nach einem der vorangegangenen Ansprüche, **dadurch gekennzeichnet, dass** die Rollen (16a, 16b, 16c, 16d) in Eckbereichen des Ladungsträgers angeordnet sind.

11. Ladungsträger nach einem der vorangegangenen Ansprüche, **dadurch gekennzeichnet, dass** die Ausnehmung (21) nahe einer Ecke des Ladungsträgers (10) angeordnet ist.

12. Ladungsträger nach einem der vorangegangenen Ansprüche, **dadurch gekennzeichnet, dass** der Ladungsträger (10) wenigstens eine lenkbare Rolle (16b) aufweist, wobei der Hebel (18) an der lenkbaren Rolle (16b) angeordnet ist.

13. Vorrichtung zur Warenpräsentation im Einzelhandel, insbesondere nach Art eines Displays, umfassend einen Ladungsträger (10) nach einem der vorangehenden Ansprüche.

## Claims

1. Load carrier (10) for transporting and/or storing goods, in particular in the form of a dolly, comprising a platform (11) consisting of a plastic, on whose upper side (12) a bearing surface (13) for the goods or for a device for receiving the goods is provided, and on whose underside (14) a plurality of castors (16a, 16b, 16c, 16d) are arranged, wherein at least one castor (16b) comprises a lever (18) which is designed in the form of a brake or locking lever and can be actuated by foot, wherein the platform (11) comprises a cavity (21) at the edge, arranged above the lever (18), which provides access to the lever (18), and wherein the cavity (21) extends above the entire height (27) of the platform, in particular from its upper side (12) to its underside (14), **characterised in that** the cavity (21) is designed curved.

2. Load carrier according to claim 1, **characterised in that** a length (24) can be assigned to the cavity (21), which is greater than a width (25) of the lever (18).

3. Load carrier according to one of the preceding claims, **characterised in that** the load carrier (10) has dimensions (45, 46), specifically a length (45) and a width (46), that correspond to dimensions of a conventional load carrier.

4. Load carrier according to one of the preceding claims, **characterised in that** the load carrier has dimensions (45, 46), specifically a length (45) and width (46), of a quarter pallet.

5. Load carrier according to one of the preceding claims, **characterised in that** the platform (11) is designed substantially continuously along a length (45) and along a width (46) of the load carrier (10), with the exception of stiffening structures (33) or functional surfaces (29).

6. Load carrier according to one of the preceding claims, **characterised in that** the upper side (12) of the platform (11) is designed as a continuous or substantially continuous bearing surface (13) for the goods, and extends along a length (45) and along a width (46) of the load carrier (10).

7. Load carrier according to one of claims 1 to 4, **characterised in that** the load carrier (10) is designed to be frame-like, wherein the platform (11) surrounds a central opening.

8. Load carrier according to one of the preceding claims, **characterised in that** the load carrier (10) has four castors (16a, 16b, 16c, 16d).

9. Load carrier according to one of the preceding claims, **characterised in that** the load carrier (10) has two fixed castors (16c, 16d) and two steerable castors (16a, 16b).

10. Load carrier according to one of the preceding claims, **characterised in that** the castors (16a, 16b, 16c, 16d) are arranged in corner areas of the load carrier.

11. Load carrier according to one of the preceding claims, **characterised in that** the cavity (21) is arranged close to a corner of the load carrier (10).

12. Load carrier according to one of the preceding claims, **characterised in that** the load carrier (10) has at least one steerable castor (16b), wherein the lever (18) is arranged on the steerable castor (16b).

13. Device for product presentation in the retail trade, in particular in the form of a display, comprising a load carrier (10) according to one of the preceding claims.

## Revendications

1. Porte-charge (10) destiné au transport et/ou au stockage de marchandises, en particulier sous la forme d'un chariot, comprenant un plateau (11) composé de matière plastique, sur la face supérieure (12) duquel une surface d'appui (13) est fournie pour les marchandises ou pour un moyen destiné à recevoir les marchandises, et sur la face inférieure (14) duquel une pluralité de roulettes (16a, 16b, 16c, 16d) est disposée, dans lequel au moins une roulette (16b) comprend un levier (18) qui est conçu à la manière d'un levier de frein ou de blocage et qui peut être actionné au pied, dans lequel le plateau (11) comprend sur le bord disposé au-dessus du levier (18) un évidement (21) qui offre un accès au levier (18), et dans lequel l'évidement (21) s'étend sur toute la hauteur (27) du plateau, en particulier depuis sa face supérieure (12) jusqu'à sa face inférieure (14),
**caractérisé en ce que** l'évidement (21) est conçu en forme d'arc.

2. Porte-charge selon la revendication 1, **caractérisé en ce que** l'évidement (21) peut se voir associer une longueur (24) qui est supérieure à une largeur (25) du levier (18).

3. Porte-charge selon une des revendications précédentes, **caractérisé en ce que** le porte-charge (10) présente des dimensions (45, 46), à savoir une longueur (45) et une largeur (46), qui correspondent aux dimensions d'un porte-charge classique.

4. Porte-charge selon une des revendications précédentes, **caractérisé en ce que** le porte-charge présente des dimensions (45, 46), à savoir une longueur (45) et une largeur (46), d'un quart de palette.

5. Porte-charge selon une des revendications précédentes, **caractérisé en ce que** le plateau (11) est conçu sensiblement de manière continue le long d'une longueur (45) et le long d'une largeur (46) du porte-charge (10), à l'exception des structures de renforcement (33) ou de surfaces fonctionnelles (29).

6. Porte-charge selon une des revendications précédentes, **caractérisé en ce que** la face supérieure (12) du plateau (11) est conçue sous la forme d'une surface d'appui (13) continue ou sensiblement continue pour les marchandises et s'étend le long d'une longueur (45) et le long d'une largeur (46) du porte-charge (10).

7. Porte-charge selon une des revendications 1 à 4, **caractérisé en ce que** le porte-charge (10) est conçu à la manière d'un cadre, dans lequel le plateau (11) borde une ouverture centrale.

8. Porte-charge selon une des revendications précédentes, **caractérisé en ce que** le porte-charge (10) présente quatre roulettes (16a, 16b, 16c, 16d).

9. Porte-charge selon une des revendications précédentes, **caractérisé en ce que** le porte-charge (10) présente deux roulettes fixes (16c, 16d) et deux roulettes orientables (16a, 16b).

10. Porte-charge selon une des revendications précédentes, **caractérisé en ce que** les roulettes (16a, 16b, 16c, 16d) sont disposées dans des zones de coin du porte-charge.

11. Porte-charge selon une des revendications précédentes, **caractérisé en ce que** l'évidement (21) est disposé à proximité d'un coin du porte-charge (10).

12. Porte-charge selon une des revendications précédentes, **caractérisé en ce que** le porte-charge (10) présente au moins une roulette orientable (16b), le levier (18) étant disposé sur la roulette orientable (16b).

13. Dispositif destiné à présenter des marchandises dans le commerce de détail, en particulier à la manière d'un présentoir, comprenant un porte-charge (10) selon une des revendications précédentes.
